# EUROPEAN PATENT APPLICATION

(11) **EP 4 597 852 A1**
(43) Date of publication of application: **06.08.2025**
(21) Application number: 23869415.2
(22) Date of filing: 01.02.2023
(51) Int. Cl.: H04B 3/46

(54) **TEST DEVICE, METHOD AND APPARATUS, AND COMPUTER-READABLE STORAGE MEDIUM**

(30) Priority: 28.09.2022 CN 202211194275
(71) Applicant: China Mobile Group Design Institute Co., Ltd., Beijing 100080 (CN); CHINA MOBILE COMMUNICATIONS GROUP CO., LTD., Beijing 100032 (CN)
(72) Inventor: ZHANG, Ying, Beijing 100080 (CN); XU, Wei, Beijing 100080 (CN); BAO, Xiao, Beijing 100080 (CN); HUANG, Yijun, Beijing 100080 (CN)
(74) Representative: Maiwald GmbH
(86) International application number: PCT/CN2023/074103
(87) International publication number: WO 2024/066152

(57) **Abstract**

Disclosed in the embodiments of the present application are a test device, method and apparatus. and a computer-readable storage medium, The test device at least comprises a master node and a plurality of slave nodes, wherein the master node at least comprises a first wireless transceiving module and an analysis module, the first wireless transceiving module being configured to receive pieces of channel data., which are sent from each of the plurality of slave nodes, and the analysis module being configured to perform analysis processing on each piece of channel data, so as to obtain a test value for a reference channel index, and each of the plurality of slave nodes at least comprises a second wireless transceiving module and a parsing module, the second wireless transceiving module being configured to collect a radio air interface signal corresponding to each of the plurality of slave nodes, the parsing module being configured to perform parsing processing on the radio air interface signal corresponding to each of the plurality of slave nodes, so as to obtain channel data of each of the plurality of slave nodes, and the second wireless transceiving module being further configured to send the channel data of each of the plurality of slave nodes to the master node.

## Description

### CROSS-REFERENCE TO RELATED APPLICATIONS

This application is based on and claims priority to Chinese patent application Test Device, Method and Apparatus, and Computer-Readable Storage Medium NO.202211194275.4, filed on September.28, 2022, the entire contents of which are incorporated herein by reference.

### TECHNICAL FIELD

The disclosure relates to the field of edge computing technology and relates to, but is not limited to, a test device, a method, an apparatus, and a computer-readable storage medium.

### BACKGROUND

For a relevant spectrum testing instrument, the master unit and the antenna module are connected via wired connections, and the signal is analyzed and processed by the master unit. This applies to scenarios where the signal is acquired manually in real time.

The relevant testing instrument are generally applied to the following scenarios: road testing, fixed-point testing and manual carrying testing. However, all these three testing methods face significant time limitations, often failing to meet the required testing depth and testing accuracy standards, resulting in fail to fully uncover problems or even detect real coverage or interference problems.

### SUMMARY

In view of the foregoing, embodiments of the disclosure expect to provide a test device, a method, an apparatus, and a computer-readable storage medium.

The technical solutions of the embodiments of the disclosure are realized as follows.

Embodiments of the disclosure provide a device for testing a radio air interface signal. The test device includes at least a master node and a plurality of slave nodes.

The master node includes at least a first wireless transceiver module and an analyzing module; the first wireless transceiver module is configured to receive channel data transmitted by each of the plurality of slave nodes, and the analyzing module is configured to obtain a test value of a reference channel indicator by analyzing the channel data.

Each of the plurality of slave nodes includes at least a second wireless transceiver module and a parsing module; the second wireless transceiver module of each of the plurality of slave nodes is configured to acquire a radio air interface signal corresponding to respective slave nodes, the parsing module of each of the plurality of slave nodes is configured to obtain the channel data of respective slave nodes by parsing the radio air interface signal corresponding to each of the plurality of slave nodes, and the second wireless transceiver module of each of the plurality of slave nodes is further configured to transmit the channel data of respective slave nodes to the master node.

Embodiments of the disclosure provide a method for testing a radio air interface signal, applied to a test device. The method includes controlling each of the plurality of slave nodes to transmit channel data of respective slave nodes to a master node via a second wireless transceiver module; controlling the master node to receive the channel data via a first wireless transceiver module; and obtaining a test value of a reference channel indicator by controlling an analyzing module of the master node to perform a channel analyzing on the channel data based on the reference channel indicator.

Embodiments of the disclosure provide an apparatus for testing a radio air interface signal. The apparatus includes a transmission module, configured to control each of the plurality of slave nodes to transmit channel data of respective slave nodes to a master node via a second wireless transceiver module; a receiving module, configured to control the master node to receive the channel data via a first wireless transceiver module; and an analyzing module, configured to obtain a test value of a reference channel indicator by controlling an analyzing module of the master node to perform a channel analyzing on the channel data based on the reference channel indicator.

Embodiments of the disclosure provide a computer-readable storage medium. The computer-readable storage medium stores computer-executable instructions, which are configured to perform the method described above.

Embodiments of the disclosure expect to provide a test device, a method, an apparatus, and a computer-readable storage medium. The test device includes at least a master node and a plurality of slave nodes. The master node includes at least a first wireless transceiver module and an analyzing module; the first wireless transceiver module is configured to receive channel data transmitted from each of the plurality of slave nodes, and the analyzing module is configured to obtain a test value of a reference channel indicator by analyzing the channel data. Each of the plurality of slave nodes includes at least a second wireless transceiver module and a parsing module; the second wireless transceiver module of each of the plurality of slave nodes is configured to acquire a radio air interface signal corresponding to respective slave nodes, the parsing module of each of the plurality of slave nodes is configured to obtain the channel data of respective slave nodes by parsing the radio air interface signal corresponding to respective slave nodes, and the second wireless transceiver module of each of the plurality of slave nodes is further configured to transmit the channel data of respective slave nodes to the master node. Thus, the wireless communication between the master node and the slave node is completed through the first wireless transceiver module and the second wireless transceiver module, and the separation of the master node and the slave nodes is realized, and the slave nodes may be flexibly arranged. The testing accuracy is improved by adding slave nodes or extending the acquisition time of the slave nodes to improve the testing depth, so as to thoroughly uncover the actual coverage or interference problems.

### BRIEF DESCRIPTION OF THE DRAWINGS

FIG. 1 is a structural block diagram illustrating a frame structure of a specialized spectrum testing instrument provided in the related art.
FIG. 2 is a structural block diagram illustrating a device for testing a radio air interface signal provided in an embodiment of the disclosure.
FIG. 3 is another structural block diagram illustrating a device for testing a radio air interface signal provided in an embodiment of the disclosure.
FIG. 4 is a flow chart illustrating a method for testing a radio air interface signal provided in an embodiment of the disclosure.
FIG. 5 is a flow chart illustrating a method for acquiring a radio air interface signal provided in an embodiment of the disclosure.
FIG. 6 is another flow chart illustrating a method for testing a radio air interface signal provided in an embodiment of the disclosure.
FIG. 7 is another flow chart illustrating a method for testing a radio air interface signal provided in an embodiment of the disclosure.
FIG. 8 is another structural block diagram illustrating a device for testing a radio air interface signal provided in an embodiment of the disclosure.
FIG. 9 is a block diagram illustrating an apparatus for testing a radio air interface signal provided in an embodiment of the disclosure.

### DETAILED DESCRIPTION

In order to make the purpose, technical solutions and advantages of the embodiments of the disclosure clearer, the disclosure will be described in further detail below in conjunction with the accompanying drawings, the described embodiments should not to be construed as a limitation of the disclosure, and all other embodiments obtained by a person of ordinary skill in the art without inventive step shall fall within the scope of protection of the present invention.

In the following description, the term "some embodiments" is used to describe a subset of all possible embodiments. It may be understood that, however, that "some embodiments" may be the same subset or a different subset of all possible embodiments and may be combined with each other without conflicts.

In the following description, the term "first/second/third" is used only to distinguish between similar objects and does not represent a specific ordering of the objects. It may be understood that the terms "first/second/third" may be interchanged in a particular order or sequence where permitted to enable the embodiments of the disclosure described herein to be practiced in an order other than that illustrated or described herein.

Unless otherwise defined, all technical and scientific terms used herein have the same meaning as generally understood by those skilled in the art belonging to the disclosure. The terms used herein are for the purpose of describing embodiments of the disclosure only and are not intended to limit the disclosure.

In order to better understand the test device provided in embodiments of the disclosure, the test device in the related art and the drawbacks exist are first described.

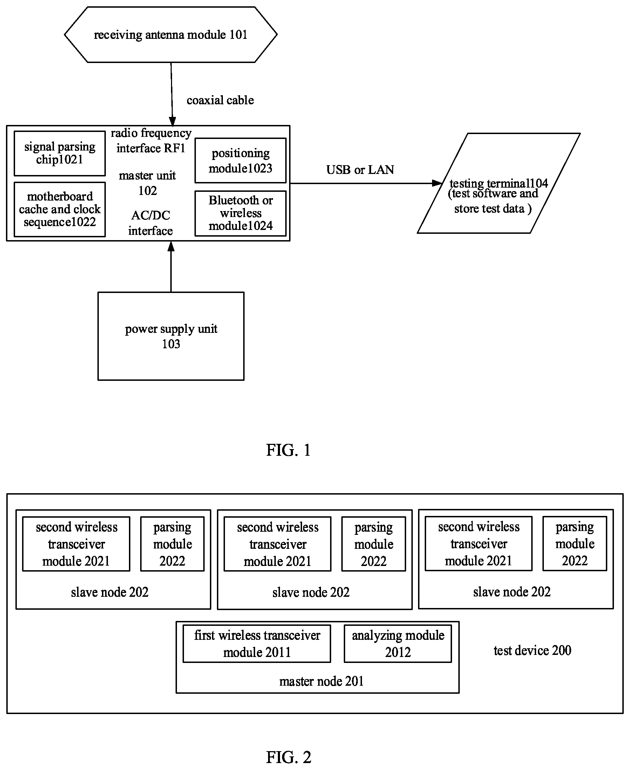

A basic frame of a relevant specialized spectrum testing instrument (e.g., a swept spectrum instrument, a spectrum instrument, a comprehensive testing instrument, etc.) is shown in FIG. 1, including a receiving antenna module 101, a master unit 102, a power supply unit 103, and a testing terminal 104.

The receiving antenna module 101 mainly relies on a coaxial cable to connect with an interface of the master unit 102 (using a coaxial male-female connector type). The receiving antenna module 101 has no internal chip, and is generally an omnidirectional wide bandwidth antenna. The lower part of the module 101 is equipped with a magnet, which may be attached to a roof of a vehicle or a fixed metal surface.

The master unit 102 mainly includes a signal parsing chip 1021, a motherboard cache and a clock sequence 1022, a positioning module 1023 (e.g., a global positioning system (GPS) module), and a Bluetooth or wireless module 1024.

The testing terminal 104 is currently mostly an external personal computer (PC), providing solutions with a universal serial bus (USB) or a local area network (LAN) interface, which is mainly used for real-time data transmission. The PC is configured to install testing hardware drivers and test software, and to store test data. The software interface is capable of presenting test statistics and analyzing results. In addition, the testing terminal 104 can be integrated with the master unit 102 to form a displayable testing instrument, i.e., the testing terminal 104 and the master unit 102 in FIG. 1 may be combined into a single unit.

The testing process in the related technology includes receiving a signal, signal processing and analysis, and data processing and analysis. However, in the related technology, a wired connection is used between the master unit and the receiving antenna module, and the signal is analyzed by the master unit. The related technology is only applicable to application scenarios in the form of real-time manual acquisition.

Thus, the related technology face problems with testing accuracy, testing depth and application scenario limitations. Currently, there are two main testing methods for testing instruments: in-vehicle testing and personal portable testing.

In actual testing, the following sampling rate standards exist: without parsing the Layer 3, the sampling rate is less than or equal to 500 milliseconds/point; with the Layer 3 parsed, the sampling rate is less than or equal to 2 seconds/point. Assuming a vehicle speed of 40 kilometers per hour, the minimum spacing between sampling points is 20 meters. However, in the actual testing, the testing speed will be higher than the ideal value, and the configuration of the frequency points will greatly affect the efficiency of the acquisition, the actual sampling rate may be up to 5 seconds/point. This introduces a new problem: insufficient testing accuracy.

Similarly, relevant field tests (e.g., residential area testing and indoor coverage testing) are usually carried out by tester walking while carrying testing devices, which is known as "manual spotting" for testing and acquisition. Then the issue of traversal degree of walking becomes a key factor for the accuracy of the test and depth of the test. Some places may have weak coverage on a certain floor, but the tester only tests a few sample floors and does not traversal to all coverage dead ends. Some large underground parking lots may only have one area tested due to limited manpower. Some residential areas have a plurality of coverage blackspots, but often only one weak coverage spot is tested and handle through complaints, while the rest of the locations are always ignored. Thus, this kind of instrument can not accurately uncover the existing problems.

Terms involved in embodiments of the disclosure are explained herein.

Narrowband internet of things (NB-IOT) is a low-power wide-area network (LPWAN) radio standard defined by the 3rd generation partnership project (3GPP) to extend the range of mobile devices and services. The standard was finalized in June 2016 in 3GPP release 13 (LTE Advanced Pro). Other 3GPP IoT technologies include enhanced machine-type communication (LTE enhanced MTO, eMTC) and extended coverage GSM (EC-GSM-IoT). The NB-IoT focuses particularly on indoor coverage, low cost, long battery life and high connection density. The NB-IoT uses a portion of the long term evolutionary technology standard, though restricting the bandwidth to a single narrow frequency at 200 kHz. The NB-IoT uses orthogonal frequency division multiplexing (OFDM) modulation to handle downlink communication and single-carrier frequency-division multiple access (SC -FDMA) to handle uplink communication.

LongRange internet of things (LoRa) is based on spread spectrum modulation technology derived from coded chirp spread spectrum (SSC) technology. The LoRa operates in license-free sub-gigahertz (GHz) radio frequency bands, such as 433 Mega Hertz (MHz), 868 MHz (Europe), 915 MHz (Australia and North America), and 923 MHz (Asia). LoRa is capable of communicating over long distances with low energy consumption, e.g. more than 10 kilometers in the countryside. The technology includes a physical layer, while other technologies and protocols include upper layer protocols, such as long range wide area network (LoRaWAN). The data rate of the LoRa may range from 27 kilobits per second (Kbps) to 0.3 Kbps, depending on the spreading factor. A new LoRa chipset was released in January 2018, which has a lower power consumption drop, higher transmission power, and smaller size compared to the previous product. LoRa devices have geolocation capabilities, and are used for trilateration of the device's location using the timestamp of the gateway. LoRa and LoRaWAN enable long range connectivity for IoT devices in various industries. A LoRaWAN range extender is called LoRaX.

Bluetooth (a short-range wireless technology standard) is a wireless communication technology standard used to allow fixed and mobile devices to exchange data over short distances to form a personal area network (PAN). Bluetooth uses short-range ultra high frequency (UHF) radio waves to communicate over 2.4 to 2.485 GHz Industrial, Scientific and Medical (ISM) frequency band. Developed in 1994, Bluetooth was initially designed as a wireless alternative to the asynchronous transmission standard interface (RS-232) data cables. Bluetooth is capable of linking multiple devices and overcome synchronization problems. The Bluetooth technology is currently maintained by the Bluetooth Special Interest Group (SIG), which has more than 30,000 members in the fields of telecommunications, computers, networking and consumer electronics.

Wireless Local Area Network (A family of wireless network protocols, Wi-Fi), also known as "wireless hotspots" or "wireless networks", is a trademark of the Wi-Fi Alliance, a wireless local area network (WLAN) technology based on the IEEE 802.11 standard. "Wi-Fi" is often written as "WiFi" or "Wifi", but these are not recognized by the Wi-Fi Alliance. Wi-Fi products are rigorously tested by an independent, authorized testing laboratory of the Wi-Fi Alliance. Once a product successfully passes the test, the manufacturer or seller is granted the right to use the Wi-Fi logo, the Wi-Fi CERTIFIED logo, and associated trademarks. The Wi-Fi Alliance uses the term "Wi-Fi CERTIFIED" to refer to these certified products. Certification means that the product is interoperable with other Wi-Fi CERTIFIED devices operating in the same frequency bands.

Edge computing, also known as edge calculation, is a distributed computing architecture that moves the computing of applications, data and services from the center node of the network to the logical edge nodes of the network for processing. The edge computing breaks down large-scale services that were originally handled by the center node into smaller and more manageable parts, and disperses the parts to the edge nodes for processing. The edge nodes are closer to a user terminals, which speeds up the processing and sending of data and reduces the latency. Under this architecture, data analysis and knowledge generation are closer to the source of the data, and thus more suitable for processing big data.

Atmospheric waveguide interference is an anomalous atmospheric structure in tropospheric conditions that forms a trapping refraction. The atmospheric waveguide interference is characterized by ultra-long horizontal scales and a significant weather background. It mainly caused by atmospheric inversion and humidity inversion, that is, the density of water vapor rapidly decreases with increasing altitude and the temperature increases with increasing altitude. The main weather processes that facilitate the formation of atmospheric waveguides include: evaporation at sea level, high-pressure sinking, frontal processes, nighttime radiative inversion, and advection effects. When atmospheric waveguides occur, the electromagnetic waves propagating in the near-Earth layer are affected by atmospheric refraction, causing propagation trajectory of the electromagnetic waves to bend toward the ground. When the curvature exceeds the curvature of the surface of the earth, the electromagnetic waves are partially trapped within a thin layer of atmospheric of a certain thickness (i.e., the waveguide layer), just like electromagnetic waves propagating in a planar dielectric waveguide. This phenomenon of trapped and refracted electromagnetic wave propagation is called atmospheric waveguide propagation. The presence of atmospheric waveguide environment changes the path and range of electromagnetic wave propagation, so that some special propagation characteristics appear in communication, detection, navigation and other systems.

Atomic clock is a clock that calculates and maintains the accuracy of time based on an atomic resonance frequency standard. Atomic clock is the most accurate time measurement and frequency standard known in the world, and is also the international time and frequency conversion benchmarks ueed to control signals of television broadcasts and global positioning system (GPS) satellites. Atomic clock does not use radioactivity for timekeeping, but rather precise microwave signals released when electrons shift energy levels. Early atomic clocks were microwaves stimulators with attached tools. The best atomic clocks today are based on absorption spectroscopy of cold atoms in atomic fountains.

Master information block (MIB): In order to properly access a cell, after the User Equipment (UE) has completed frequency scanning (whether it is scanning at a specified frequency point or scanning the entire frequency band, the purpose is to find a suitable central carrier frequency point, refer to "LTE Physical Transport Resources (3) - Time-Frequency Resources") and cell synchronization (refer to "LTE Cell Search - Physical Cell ID and Synchronization Signals PSS, SSS"), the UE needs to continue to read the system information of the cell. System information is continuously and repeatedly broadcast by the network side, so that the UE can obtain system information in time whenever it is turned on. The MIB in the embodiments of the disclosure generally refers to Layer 3 messages under the frequency conditions compatible with the instrument (i.e., the test device).

Due to the problems existing in the related technology, embodiments of the disclosure provide a device for testing a radio air interface signal. As shown in FIG. 2, the test device 200 includes at least a master node 201 and a plurality of slave nodes 202 (three slave nodes 202 are shown exemplarily in FIG. 2).

The master node 201 includes at least a first wireless transceiver module 2011 and an analyzing module 2012. The first wireless transceiver module 2011 is configured to receive channel data transmitted form each of the plurality of slave nodes. The analyzing module 2012 is configured to obtain a test value of a reference channel indicator by analyzing the channel data.

In an embodiment of the disclosure, the first wireless transceiver module 2011 may be an NB-IOT transceiver module, a LoRa transceiver module, a Bluetooth transceiver module, a Wi-Fi transceiver module, or an IoT card transceiver module, etc. The master node 201 is capable of establishing a wireless transmission channel with the plurality of slave nodes 202 based on the first wireless transceiver module 2011, in order to realize wireless communication between the master node 201 and the plurality of slave nodes 202 via the wireless transmission channel.

The analyzing module 2012 is configured to analyze and parse the channel data to obtain the test value of the reference channel indicators, such as a statistic of a weak coverage area, a statistic of a black spot road section, a statistic of a coverage rate of a set area, etc.

Referring to FIG. 2, each of the plurality of slave nodes 202 includes at least a second wireless transceiver 2021 module and a parsing module 2022. The second wireless transceiver module 2021 of each of the plurality of slave nodes is configured to acquire a radio air interface signal corresponding to respective slave nodes, i.e., a radio air interface signal of the position of respective slave nodes 202. The parsing module 2022 of each of the plurality of slave nodes is configured to obtain the channel data of respective slave nodes by parsing the radio air interface signal corresponding to respective slave nodes 202. In addition, the second wireless transceiver module 2021 of each of the plurality of slave nodes is further configured to transmit the channel data of respective slave nodes to the master node.

In an embodiment of the disclosure, the second wireless transceiver module 2021 may be an NB-IOT transceiver module, a LoRa transceiver module, a Bluetooth transceiver module, a Wi-Fi transceiver module, or an IoT card transceiver module, etc. Each of the plurality of slave nodes 202 is capable of establishing a wireless transmission channel with the master node 201 based on the corresponding second wireless transceiver module 2021, in order to realize wireless communication between the master node 201 and the plurality of slave nodes 202 via the wireless transmission channel.

In actual implementation, the first wireless transceiver module 2012 and the second wireless transceiver module 2021 are wireless transceiver modules of the same type, which may be matched. After successful matching, the establishment of a wireless transmission channel between the master node 201 and each of the slave nodes 202 is completed, so as to enable the master node 201 and each of the slave nodes 202 to transmit data through the wireless transmission channel.

In an embodiment of the disclosure, a parsing module 2022 is deployed on each of the plurality of slave nodes. The parsing module 2022 is configured to parse the radio air interface signals corresponding to respective slave nodes 202 into channel data such as frequency, frequency points, field strengths, quality data, and etc., i.e., the parsing module 2022 is configured to parse electromagnetic wave signals received from the slave node 202 into the channel data.

In some embodiments, the master node 201 may be a computer or a server device with transmission and analysis capabilities. The slave node 202 may be an antenna capable of receiving electromagnetic wave signals.

Embodiments of the disclosure provide a test apparatus, applied for testing a radio air interface signal. The test device includes at least a master node and a plurality of slave nodes. The master node includes at least a first wireless transceiver module and an analyzing module; the first wireless transceiver module is configured to receive channel data transmitted from each of the plurality of slave nodes, and the analyzing module is configured to obtain a test value of a reference channel indicator by analyzing the channel data. Each of the plurality of slave nodes includes at least a second wireless transceiver module and a parsing module; the second wireless transceiver module of each of the plurality of slave nodes is configured to acquire a radio air interface signal corresponding to respective slave nodes, the parsing module of each of the plurality of slave nodes is configured to obtain the channel data of respective slave nodes by parsing the radio air interface signal corresponding to respective slave nodes, and the second wireless transceiver module of each of the plurality of slave nodes is further configured to transmit the channel data of respective slave nodes to the master node. Thus, the wireless communication between the master node and the slave node is completed through the first wireless transceiver module and the second wireless transceiver module, and the separation of the master node and the slave nodes is realized, and the slave nodes may be flexibly arranged. The testing accuracy is improved by adding slave nodes or extending the acquisition time of the slave nodes to improve the testing depth, so as to thoroughly uncover the actual coverage or interference problems.

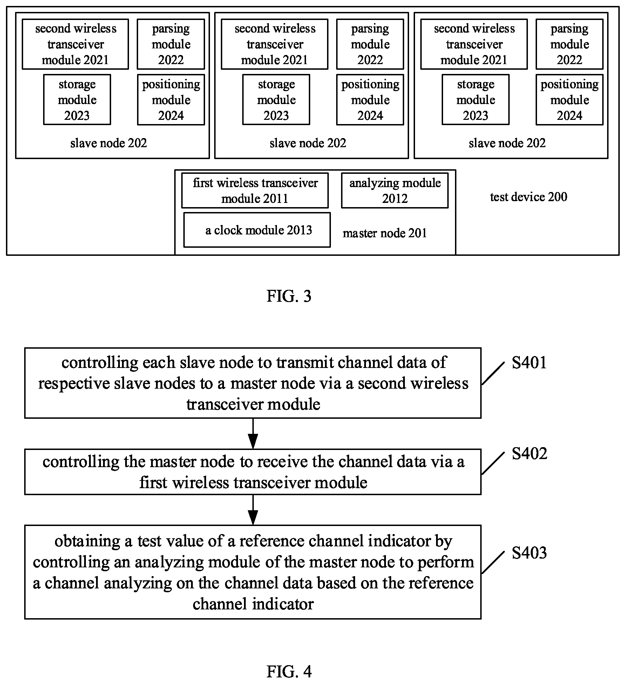

In some embodiments, as shown in FIG. 3, the master node 201 further includes a clock module 2013. The clock module 2013 is configured to perform time calibration on each of the plurality of slave nodes to synchronize time of each of the plurality of slave nodes with universal time coordinated (UTC).

The clock module 2013 may be a clock sequence, which may also be called an atomic clock. During the measurement process, on the one hand, the slave node 202 may suffer from a clock misalignment of the slave node due to a power failure, a network failure, or a device failure; on the other hand, since the test device supports asynchronous testing, the clock module 2013 may be utilized to match the clock of the slave node in order to realize the time calibration of each of the plurality of slave nodes.

Referring to FIG. 3 further, in some embodiments, each of the plurality of slave nodes 202 further includes a storage module 2023 and a positioning module 2024. The storage module 2023 of each of the plurality of slave nodes is configured to store the channel data of respective slave nodes. The positioning module 2024 of each of the plurality of slave nodes is configured to acquire position information of respective slave nodes.

Each of the plurality of slave nodes 202 acquires the radio air interface signal using the second wireless transceiver module 2021, and obtains the channel data by parsing the radio air interface signal using the parsing module 2022. Then, each storage module 2023 stores the channel data of the corresponding slave node, so as to realize the marginalization and distribution of the acquisition, parsing and storage, thus improving the speed and efficiency of the acquisition, parsing and storage.

In an embodiment of the disclosure, each positioning module 2024 is capable of acquiring the position information of respective slave node 202, i.e., deployment position information of the slave node, in order to realize the positioning of each of the plurality of slave nodes. Based on this, it is possible to associate the channel data with the position information to understand a channel situation at a position where the slave node is deployed.

Based on the above embodiments, embodiments of the disclosure provide a method for testing a radio air interface signal, applied to a test device for radio air interface signal described above. The method provided in the embodiments of the disclosure may be implemented by a computer program which, when executed, performs the method provided in the embodiments of the disclosure. In some embodiments, the computer program may be performed at a processor in the device for testing a radio air interface signal described above. FIG. 4 is a flow chart illustrating a method for testing a radio air interface signal provided in an embodiment of the disclosure. As shown in FIG. 4, the method includes the following steps S401 to S403.

At step S401, each of the plurality of slave nodes is controlled to transmit channel data of respective slave nodes to a master node via a second wireless transceiver module.

The test device controls each second wireless transceiver module to transmit the channel data of the corresponding slave node to the master node.

In an embodiment of the disclosure, each of the plurality of slave nodes has a wireless communication link established with the master node. Each of the plurality of slave nodes is capable of transmitting the channel data to the master node based on the wireless communication link in order to realize wireless transmission between the master node and the slave node.

At step S402, the master node is controlled to receive the channel data via a first wireless transceiver module.

The master node receives the channel data transmitted by each of the plurality of slave nodes via the first wireless transceiver module of the master node. In this case, the master node receives each channel data via the wireless communication link.

In an embodiment of the disclosure, the first wireless transceiver module and the second wireless transceiver module are two modules of the same type and matching with each other, in which one module serves as a transmitting module and the other module serves as a receiving module.

At step S403, a test value of a reference channel indicator is obtained by controlling an analyzing module of the master node to perform a channel analyzing on the channel data based on the reference channel indicator.

The analyzing module of the master node is further controlled to perform the channel analyzing on the channel data. During the channel analyzing, the channel analyzing is performed according to the reference channel indicator such as a statistic of a weak coverage area, a statistic of a black spot road section, a statistic of a coverage rate of a set area, etc. The test value of the reference channel indicator may be obtained based on the channel analyzing. The actual situation of the relevant indicators such as coverage, signal strength, signal stability, etc. of the position where the slave node is deployed is obtained.

Embodiments of the disclosure provide a test method for a method for testing a radio air interface signal, applied to a test device for radio air interface signal described above. The method includes: controlling the master node to receive the channel data via a first wireless transceiver module; i.e., transmitting the channel data of each of the plurality of slave nodes to the master node via a wireless method; controlling the master node to receive the channel data via a first wireless transceiver module, in which the master node also receives the channel data via the wireless method; and obtaining a test value of a reference channel indicator by controlling an analyzing module of the master node to perform a channel analyzing on the channel data based on the reference channel indicator. Thus, the wireless communication between the master node and the slave node is completed through the first wireless transceiver module and the second wireless transceiver module, and the separation of the master node and the slave nodes is realized, and the slave nodes may be flexibly arranged. The testing accuracy is improved by adding slave nodes or extending the acquisition time of the slave nodes to improve the testing depth, so as to thoroughly uncover the actual coverage or interference problems.

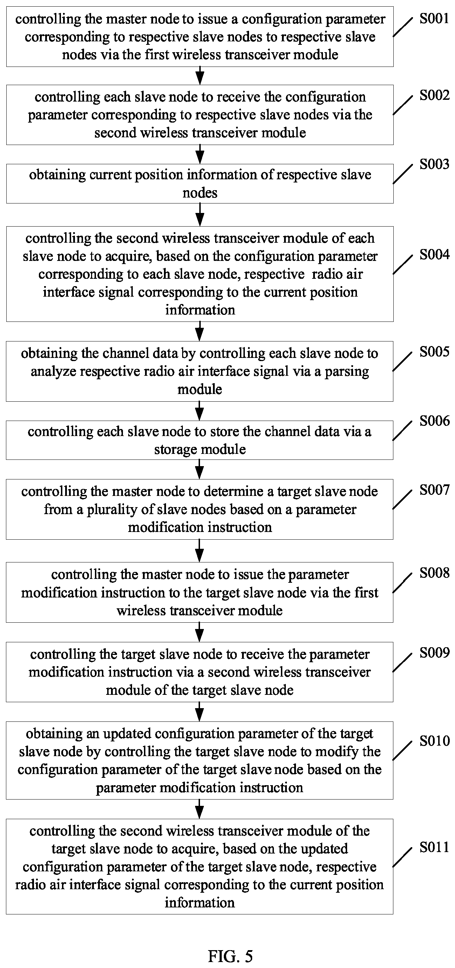

In some embodiments, each of the plurality of slave nodes acquires the radio air interface signal based on a configuration parameter of its own, in which the configuration parameter of different slave nodes may be the same or may be different. The configuration parameter is issued by the master node, and the master node may also modify the configuration parameter. Based on this, referring to FIG. 5, before performing the above step S401, the following steps S001 to step S011 may also be performed.

At step S001, the master node is controlled to issue a configuration parameter corresponding to respective slave nodes to respective slave nodes via the first wireless transceiver module.

The master node is controlled to issue the configuration parameter corresponding to respective slave nodes to respective slave nodes via the first wireless transceiver module in the wireless way.

In an embodiment of the disclosure, the master node stores the configuration parameter corresponding to respective slave node. Each configuration parameter may carry an identification of respective slave node. The master node may transmit the configuration parameter corresponding to respective slave node to respective slave node based on the identification of respective slave node.

At step S002, each of the plurality of slave nodes is controlled to receive the configuration parameter corresponding to respective slave node via the second wireless transceiver module.

Each of the plurality of slave nodes also receives the corresponding configuration parameters of respective slave node via the second wireless transceiver module in the wireless way.

At step S003, current position information of respective slave node is obtained.

The current position information of respective slave node may be obtained via the positioning module of respective slave node.

At step S004, the second wireless transceiver module of respective slave node is controlled to acquire, based on the configuration parameter corresponding to respective slave node, respective radio air interface signal corresponding to the current position information.

The second wireless radio transceiver module of respective slave node acquires respective radio air interface signal corresponding to the current position information. That is, respective second wireless transceiver module acquires the radio air interface signal at the position of respective slave node. Respective slave node acquires, based on the configuration parameter corresponding to respective slave node the radio air interface signal.

For example, some of the slave nodes acquire low frequency radio air interface signals, and some of the slave nodes acquire mid-to-high frequency radio air interface signals.

At step S005, the channel data is obtained by controlling respective slave node to parse respective radio air interface signal via a parsing module.

After acquiring the radio air interface signal, respective slave node further obtains the channel data of respective slave node by parsing respective radio air interface signal, i.e., performing distribution and marginalization processing on the radio air interface signal. In addition, the channel data may reflect the channel situation at the position where the respective slave node is deployed.

At step S006, each of the plurality of slave nodes is controlled to store the channel data via a storage module.

Each of the plurality of slave nodes may also be controlled to store the channel data corresponding to respective slave nodes via the storage module of respective slave nodes, so as to realize the purpose of distributed storage.

At step S007, the master node is controlled to determine a target slave node from a plurality of slave nodes based on a parameter modification instruction.

Before, during, or after the test, or after the end of the test, the master node is controlled to determine the target slave node from the plurality of slave nodes based on the parameter modification instruction. The target slave node is a slave node that requires to modify a configuration parameter and the parameter modification instruction carries an identification of the target slave node. That is, the master node determines the target slave node from the plurality of slave nodes based on an identification of the target slave node.

In an embodiment of the disclosure, the parameter modification instruction may be an instruction generated based on an external trigger.

At step S008, the master node is controlled to issue the parameter modification instruction to the target slave node via the first wireless transceiver module.

The master node is controlled to issue the parameter modification instruction to the target slave node via the first wireless transceiver module in the wireless way, in order to save bandwidth resources, it is not necessary to issue the parameter modification instruction to a slave node other than the target slave node.

At step S009, the target slave node is controlled to receive the parameter modification instruction via a second wireless transceiver module of the target slave node.

The target slave node also receives the parameter modification instruction via the second wireless transceiver module of the target slave node in the wireless method.

In an embodiment of the disclosure, the number of target slave nodes may be one or more, but the number of target slave nodes will not exceed the total number of slave nodes. The number of target slave nodes is determined by the number of identifications of the slave nodes carried in the parameter modification instruction.

At step S010, the target slave node is controlled to modify the configuration parameter of the target slave node based on the parameter modification instruction to obtain an updated configuration parameter of the target slave node.

The parameter modification instruction may also carry a modification method of the configuration parameters. Based on this, the target slave node is controlled to modify its own the configuration parameter based on the parameter modification instruction, there by obtaining its own updated configuration parameter.

At step S011, the second wireless transceiver module of the target slave node is controlled to acquire, based on the updated configuration parameter of the target slave node, respective radio air interface signal corresponding to the current position information.

Each second wireless transceiver module is continued to be controlled to acquire the radio air interface signal based on the updated configuration parameter.

In an embodiment of the disclosure, by the implementation of the above steps S001 to S011, the master node may transmit the configuration information to respective slave nodes via the first wireless transceiver module in the wireless method, so as to cause each of the plurality of slave nodes to acquire radio air interface information based on the corresponding configuration information of respective slave nodes. In addition, the master node may also determine the target slave node from the plurality of slave nodes based on the parameter modification instruction, and transmit the parameter modification instruction to the target slave node via the first wireless transceiver module in the wireless way, so as to cause the target slave node to obtain the updated configuration parameter by modifying the configuration parameter of the target slave node based on the parameter modification instruction, and to control the target slave node to acquire the radio air interface information based on the updated configuration parameter. Thus, the information between the master node and the slave node is transmitted in the wireless way, which can enhance the flexibility of the test device and improve the convenience of the test method.

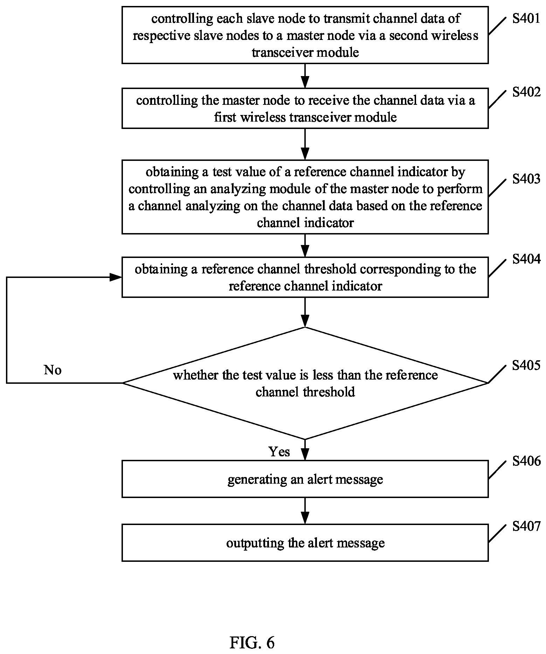

In some embodiments, in order to improve the robustness and resilience of the test device, as shown in FIG. 6, after performing the above step S403 "obtaining the test value of the reference channel indicator by controlling the analyzing module of the master node to perform the channel analyzing on the channel data based on the reference channel indicator", the following steps S404 to S407 may be performed.

At step S404, a reference channel threshold corresponding to the reference channel indicator is obtained.

The reference channel threshold may be a value preset in advance. For example, the reference channel threshold may be a coverage rate of 90%.

At step S405, the test value is determined whether it is smaller than the reference channel threshold.

A magnitude relationship between the test value and the reference channel threshold may be determined by comparing the two magnitude. If the test value is smaller than the reference channel threshold, the reference indicator at the position where the slave node is deployed is determined to not meet the standard, then proceed to step S406. If the test value is greater than or equal to the reference channel threshold, the reference indicator at the position where the slave node is deployed is determined to meet the standard, then return to step S404.

At step S406, an alert message is generated.

If the test value is smaller than the reference channel threshold, the reference indicator at the position where the slave node is deployed is determined to not meet the standard, and the alert message carrying the test value is generated.

At step S407, the alert message is output.

The alert message may be output by an external device such as a display, a buzzer, etc., to achieve the purpose of alerting in time.

In an embodiment of the disclosure, by the implementation of the above steps S404 to S407, the reference channel indicator at the position where the slave node is deployed may be determined whether or not it meets the standard based on the magnitude relationship between the reference channel threshold and the test value. In the case that the reference channel indicator does not meet the standard, the alert message may be generated and output in time, so as to achieve the purpose of alerting in time.

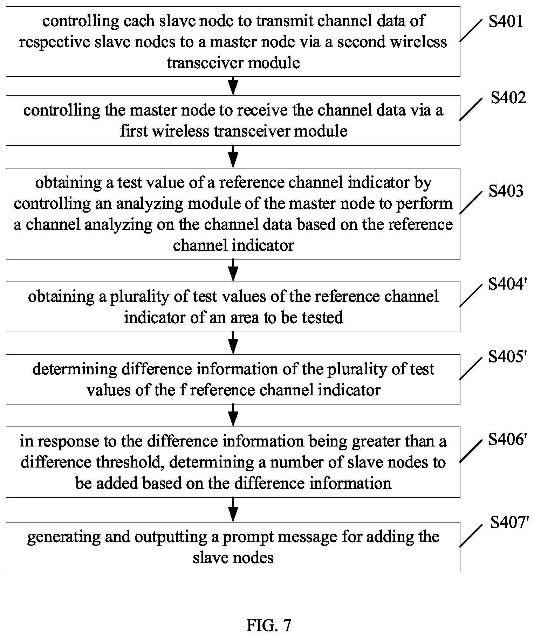

In some embodiments, in order to improve the stability of the test device, as shown in FIG. 7, after performing the above step S403 "obtaining the test value of the reference channel indicator by controlling the analyzing module of the master node to perform the channel analyzing on the channel data based on the reference channel indicator", the following steps S404' to step S407' may also be performed.

At step S404', a plurality of test values of reference channel indicator of an area to be tested are obtained.

The area to be tested is the area where the slave node is deployed. The area may be a residential district A, an office building B, etc., and the area may also be an active area such as a cab, a shared bicycle, etc., where the slave node is deployed in a cab or a shared bicycle.

In an embodiment of the disclosure, the plurality of test values of the reference channel indicator are obtained at different time points. The plurality of test values of the reference channel indicator characterize a channel quality of the area to be detected at different time points.

At step S405', difference information of the plurality of test values of the reference channel indicator is determined.

The difference information characterizes the stability of the plurality of test values of the reference channel indicator.

In actual implementation, maximum and minimum values of the plurality of test values of the reference channel indicator may be determined, and then a difference between the maximum and minimum values is determined as the difference information; and a variance or a mean square deviation of the plurality of test values of the reference channel indicator may also be determined as the difference information.

At step S406', in response to the difference information being greater than a difference threshold, a number of slave nodes to be added is determined based on the difference information.

The difference threshold may be a value set in advance. For example, the difference threshold may be 0.2, 0.3, 0.4, etc. When the difference information is greater than the difference threshold, the reference channel indicator of the area to be tested is determined to be not stable, i.e., the reference channel indicator of the area to be tested is sometimes good and sometimes bad.

At this point, the real situation of the reference channel indicator of the area to be tested cannot be accurately determined, which indicates that it is necessary to increase the slave nodes. The slave nodes that need to be added are labeled as the slave nodes to be added, and the difference information is positively correlated with the number of slave nodes to be added. That is, the number of slave nodes to be added may be obtained by multiplying the difference information with a first coefficient, in which the first coefficient is a real number greater than one.

In some embodiments, if the product of the difference information and the first coefficient is not an integer, the product is first rounded up, and the rounded up product is determined to be the number of slave nodes to be added.

In some embodiments, if the difference information is determined to be less than or equal to the difference threshold, the reference channel indicator of the area to be tested is determined to be more stable, and no additional slave nodes need to be added.

At step S407', a prompt message for adding slave nodes is generated and output.

The prompt message may be generated based on the number of slave nodes to be added. For example, if the number of slave nodes to be added is 15, the prompt message "please add 15 slave nodes" may be generated. Based on this, the prompt message for adding the slave nodes may also be output by an external device such as a display, a buzzer, or etc., in which the prompt message includes at least the number of the slave nodes to be added.

In an embodiment of the disclosure, by the implementation of the above steps S404' to step S407', in the case that the reference channel indicator of the area to be tested is determined to be not stable based on the difference information of the plurality of test of the reference channel indicator, the number of slave nodes to be added is determined based on the difference information, and the prompt message is generated and outputted based on the number of slave nodes to be added to prompt to add the slave nodes. Thus, the stability of the test is improved, and the accurate test value of the reference channel indicator of the area to be tested is obtained.

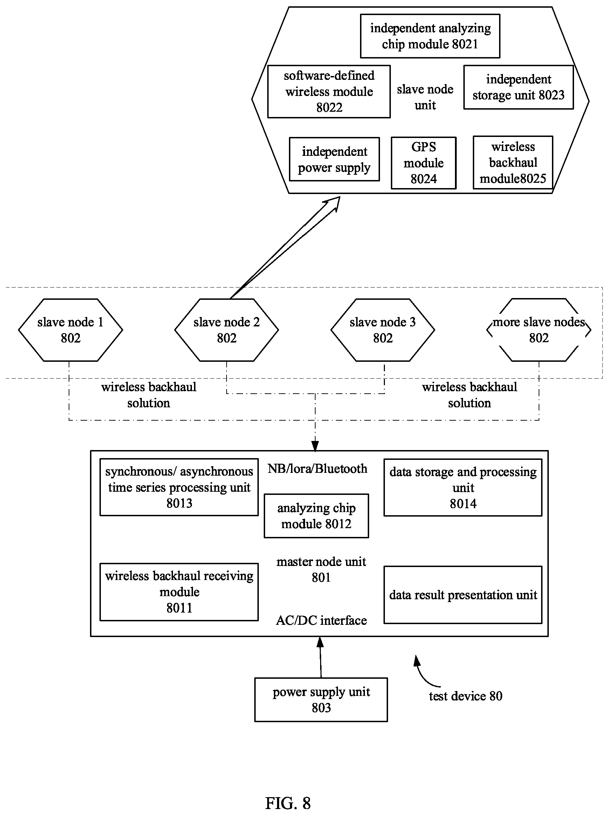

Based on the above embodiments, embodiments of the disclosure further provide a test device 80 for a radio air interface signal. As shown in FIG. 8, the test device 80 includes a master node unit 801, a plurality of slave nodes 802, and a power supply unit 803.

Referring to FIG. 8, the acquisition side in the test device 80 is separated from the master unit, i.e., the plurality of slave nodes 802 are separated from the master node unit 801. The main process includes the following process one to process eight.

At process one, a master-slave structure design is used to separate the acquisition plane from the computation and storage plane. The original receiving antenna module (i.e., the slave node) is redesigned. An independent parsing chip module 8021, a software-defined wireless module 8022, an independent storage unit 8023, a GPS module 8024, and a wireless backhaul module 8025 are added. The coaxial cable interface on the original master node unit side is canceled. The master node unit 801 adopts a wireless backhaul receiving module 8011, an analyzing chip module 8012, a synchronous/ asynchronous time series processing unit 8013, and a data storage and processing unit 8014. The independent parsing chip module 8021 corresponds to the parsing module in the embodiments described above. The independent storage unit 8023 corresponds to the storage module in the embodiments described above. The GPS module 8024 corresponds to the positioning module in the embodiments described above. The wireless backhaul module 8025 corresponds to the second wireless transceiver module in the embodiments described above. The wireless backhaul receiving module 8011 corresponds to the first wireless transceiver module in the embodiments described above. The analyzing chip module 8012 corresponds to the analyzing module in the embodiments described above. The synchronous/ asynchronous time series processing unit 8013 includes a clock module in the embodiments described above.

At process two, the slave node adopts IoT terminal technology to integrate programmable chip to enable signal capability acquisition. The required abilities are: software-defined frequency acquisition range, for narrowband or wideband domain frequency points setting as needed, and whether to use layer 3 analysis capabilities based on the configured chip capabilities. Ordinary slave node can give priority to the acquisition of field strength and signal quality data. A single node is recommended to be equipped with a storage module of more than 256 gigabytes (G) (cyclic storage mode similar to a drive recorder can be used), as well as an independent battery with long battery life requirements, a GPS positioning module, and a backhaul module corresponding to the master node.

At process three, the signal acquisition process of the slave node is categorized into 2 modes: mobile and fixed. The mobile mode can be used to acquire data by attaching to the top of a vehicle. The fixed mode is used to acquire data at a designated installed position. An antenna of the slave node receives the radio air interface signal field strength, and performs preliminary analysis to identify the frequency, frequency point, field strength and quality data (such as the ability to configure Layer 3), and then further analyses the MIB information, and stores it in real time.

At process four, the master node unit is defined as a unified data processing and analyzing presentation node. After the slave node completes all the acquisition tasks at a scheduled time, the slave node performs the centralized backhaul propagation and unified data processing and analyzing work. The master node and slave node are connected and perform the backhaul using the wireless technology. In this patent, Bluetooth or Wi-Fi is recommended for implementing a LAN configuration. One master node may correspond to a plurality of slave nodes for data connectivity, and the slave nodes may also be compatible with a plurality of master nodes for matching. The master node and the slave nodes conform to the unified development standard, and the organizational structure enhances the application flexibility of the testing instrument and the scalability of the testing project.

At process five, after matching to the master node, the slave node transmits the data acquired during a cycle to the master node according to the task number, which includes frequency, field strength, quality, MIB (on-demand), position, etc. After receiving the data, the master node imports the data into a prescribed analyzing module (realized by a customized software), which contains functions such as GIS, statistics, rendering and calculation of indexes, etc. The configuration of the analyzing chip makes the process highly efficient. This involves an asynchronous atomic clock matching process. In vehicle testing, a testing instrument with a master-slave structure is used. The master node may synchronize the GPS information stored in the slave node to the analyzing module through asynchronous post-processing of timing sequences. This allows for time calibration and the reproduction of the trajectory of the test samples.

At process six, the master node presents an analysis result (the report may be customized) and stores the result in its own storage unit for users to export and use at any time. The slave node may be dismantled and moved to the next task point at will after completing the test task.

At process seven, the power supply configuration of the master node and the slave node. The master node may use external batteries and direct AC/DC power supply. The slave node needs to be equipped with IoT terminal batteries to ensure a long endurance in a passive environment, and may be equipped with charging accessories in non-mission state.

At process eight, the slave node requires the necessary waterproof, lightning-proof and high-temperature-proof manufacturing process to adapt to different test environments.

In some embodiments, when testing using the test device described above, the following step one to step five may be performed.

At step one, the master node uniformly issues the test task configuration. For example, the master node uniformly issues necessary parameters such as a start time of the test, a frequency range and frequency points of the configuration requirements, a minimum window for acquisition, and an end time for acquisition. After the slave nodes receive the task via the wireless module, the slave modes can be arranged.

At step two, the slave nodes (device) are simply arranged on the roof of the vehicle (generally 1-2 are sufficient) or in residential areas to be tested, interference detection points, road black spots, and so on. Arrange the number of nodes (usually 1-10) as needed. After confirming the normal operation of the slave nodes, the tester may leave the test area, and then go back to retrieve the nodes after the task is completed.

At step three, the retrieved slave node starts to connect to the master node to backhaul the data of the corresponding task. The slave node may be retrieved once for one task or once for a plurality of tasks, depending on the time window of the test, the size of the test range, and the nature of the test (e.g., external interference troubleshooting, atmospheric waveguide interference troubleshooting, or 700M frequency clearing, etc.), and accordingly dynamically configured the memory and battery of the slave node.

At step four, after all the data are transmitted into the master node, the regular customization process is performed. The corresponding results and sample rendering maps may be output directly based on a standard indicator and a report template. For example, if the master node is integrated with a monitor, the results may be viewed directly.

At step five, in a road testing environment, an edge computing spectrum instrument system may also carry tests on both the master node and slave node to achieve real-time testing, just like the traditional road testing instrument. The operation process is basically the same, taking into account the applicability of traditional scenarios.

The test device provided in the embodiments of the disclosure may be applied to the following five new application scenarios.

Scenario 1, the detection and diagnosis of atmospheric waveguide interference. The atmospheric waveguide is a climatic signal interference phenomenon, which is a sporadic phenomenon. The occurrence of atmospheric waveguide interference may lead to super long-distance over-coverage of signals, resulting in increased signal overlap and thus affecting network quality. Due to its sporadic nature, atmospheric waveguide interference is difficult to capture. Traditional traversal testing purely relies on chance and is not effective in detecting atmospheric waveguide interference in time. By using the edge computing spectrum instrument (i.e., the test device provided in the embodiments of this application), the slave node may be deployed on the antenna side or at a designated monitoring point for a long time. Through spectrum testing over a week or a month, the occurrence and the end of the atmospheric waveguide effect may be detected. This provides valuable and useful data for network optimization, as the data obtained can be used to analyze the regular pattern of the phenomenon and develop emergency adjustment strategies.

Scenario two, the handling of user complaints. Currently, the structure of the residential area is becoming increasingly complex with higher building densities, and the base station is difficult to deploy into the area. As a result, the number of complaint points of the residential area has increased. Common weak coverage spots include underground parking garages, high-rise floors, elevator shafts, building corridors, carports, podium buildings and etc. The traditional manual pointing test requires several testers to carry the test device to repeat the traversal of the area, or climb through each floor, sweeping every corner of the parking garage to identify weak coverage areas. The data acquired at each point is typically superficial, and the process is time-consuming and labor-intensive. By using the edge computing spectrum instrument, the slave nodes can be deployed at suspected weak coverage locations in the above scenarios. The main node may then automatically issue testing tasks. After completing one testing cycle, the tester simply moves the slave node to a new location. This new test method has the following three advantages: first, the test data has a high depth, and the exact location and coverage of the base station may be estimated from the signal modeling based on the data, which provides higher reliability. Second, it is not required to manually search for coverage blind spots. The testing is completed by arranging a few testing points around the complaint points, which can reduce some labor. Third, the multi-standard switching does not affect the acquisition efficiency. Through software-defined receiving frequency points, tasks may be executed sequentially on different frequencies, and the same location may be tested multiple times. This method is more efficient than traditional parallel multi-frequency testing (often referred to as "spoon - feeding" testing), and improves the accuracy of frequency point analysis.

Scenario 3, testing in closed areas or in abnormal residential areas. The master-slave structure allows the slave node to function as an independent test point without manual intervention. In a closed area situation, the tester only need to enter the area once for deployment to complete the long-term guarantee testing tasks for pandemic-related residential areas. Especially when deploying slave nodes at anomaly detection points, the acquired data may be used to model sudden traffic changes and coverage status patrols, similar to the stationing mode of emergency vehicles.

Scenario 4, high-speed railroad mainline testing. As railway security checks become increasingly strict, traditional instruments now require prior approval and documentation from railway authorities to be carried aboard trains. The large-sized instruments are also a challenge for the narrow train seats, creating additional work difficulties for test engineers. By using an edge computing slave node, the complexity of instrument connection is completely eliminated, enhancing portability. The slave node may be placed at a designated location within the carriage, allowing the engineer to complete the issued test task hands-free, and then the data is returned to the master node to present the test results after returning to the train.

Scenario 5, public transportation testing. The slave node can be deployed in contracted partners such as cabs and delivery vehicles to perform urban mesh signal testing tasks that shared resources. The portability and long endurance of the slave node enable them to efficiently acquire massive test data.

The structure of the current spectrum testing instrument is not suitable for practical testing scenarios, resulting in significant fluctuations in data accuracy and low reliability. In addition, excessive manual intervention and non-standardized testing operation often lead to high cost investment with minimal returns. In response to these problems, the system structure of the testing instrument (i.e., the test device) has been redesigned by combining years of testing experience and demand analysis. With the development of chip design and software-defined modules, the operability of hardware edge computing has greatly improved. Thus, embodiments of the disclosure propose a separation scheme of the antenna receiving node (i.e., the slave node) and the processing and analyzing node (i.e., the master node) in order to make up for and improve the weaknesses or deficiencies of existing technical solutions, and ultimately enhance the accuracy and quality of spectrum testing.

The embodiments of the disclosure enhance the convenience and accuracy of spectrum testing by modifying the relevant spectrum testing instrument structure and applying edge computing design. It effectively solves the difficult problems of insufficient testing depth, poor testing range, excessive manual intervention, inaccurate data, and inapplicability of some scenarios in the related art. By decoupling the testing and analyzing modules, using edge computing for the testing module, and transforming the master-slave separation structure, the embodiments of the disclosure have newly defined the flat structure of spectrum testing instrument.

With the growing demand for the creation of 5G and 700M boutique networks and the continuously improving user experience requirements, the testing accuracy and testing depth of network testing instruments have become an important factor in the quality of network optimization. The competition in the network testing instrument market has also become increasingly intense. If testing instruments is cable of effectively freeing the hands of testers, while improving the testing accuracy and making the instrument applicable to more demanding testing scenarios, it will gain a significant foothold in the market.

The development of software-defined chips and the maturity of IoT technology have paved the way for the realization of edge computing. From the structure of master-slave separation of the embodiments of the disclosure, an innovative testing solution is introduced that can enhance both testing depth and accuracy. This solution effectively addresses and suppresses the problem of complaints against signal quality. The master-slave structure reduces the cost of equipment, eliminating the need to purchase multiple master units. The richness of the test scenarios and the convenience features of the slave nodes reduce the cost overheads.

Based on the embodiments described above, embodiments of the disclosure provide an apparatus for testing a radio air interface signal. Each module included in the apparatus, and each unit included in each module, may be implemented by a processor in a computer device; and of course, may be implemented by a corresponding logic circuit. Each module included in the apparatus, and each unit included in each module, may be implemented by a processor in a computer device; and of course, may be implemented by a corresponding logic circuit. In the process of implementation, the processor may be a Central Processing Unit (CPU), a Microprocessor Unit (MPU), a Digital Signal Processing (DSP), or a Field Programmable Gate Array (FPGA) , and etc.

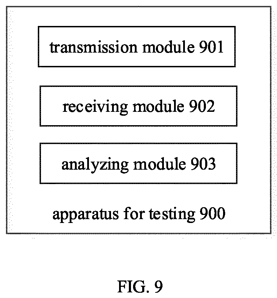

Embodiments of the disclosure further provide an apparatus for testing a radio air interface signal. FIG. 9 is a block diagram illustrating an apparatus for testing a radio air interface signal provided in an embodiment of the disclosure. As shown in FIG. 9, the apparatus for testing 900 includes a transmission module 901, a receiving module 902 and an analyzing module 903.

The transmission module 901 is configured to control each of a plurality of slave nodes to transmit channel data of respective slave nodes to a master node via a second wireless transceiver module;
The receiving module 902 is configured to control the master node to receive the channel data via a first wireless transceiver module.

The analyzing module 903 is configured to obtain a test value of a reference channel indicator by controlling an analyzing module of the master node to perform a channel analyzing on the channel data based on the reference channel indicator.

In some embodiments, the apparatus 900 further includes: controlling the master node to issue a configuration parameter corresponding to e respective slave nodes to respective slave nodes via the first wireless transceiver module; a first control module, configured to control each of the plurality of slave nodes to receive the configuration parameter corresponding to respective slave nodes via the second wireless transceiver module; a first obtaining module, configured to obtain current position information of respective slave nodes; a second control module, configured to control the second wireless transceiver module of each of the plurality of slave nodes to acquire, based on the configuration parameter corresponding to respective slave nodes, respective radio air interface signal corresponding to the current position information; a third control module, configured to obtain the channel data by controlling each of the plurality of slave nodes to parse respective radio air interface signal via a parsing module; and a fourth control module, configured to control each of the plurality of slave nodes to store the channel data via a storage module.

In some embodiments, the apparatus 900 further includes: a fifth control module, configured to control the master node to determine a target slave node from a plurality of slave nodes based on a parameter modification instruction, in which the target slave node is a slave node that requires to modify a configuration parameter and the parameter modification instruction carries an identification of the target slave node; a sixth control module, configured to control the master node to issue the parameter modification instruction to the target slave node via the first wireless transceiver module; a seventh control module, configured to control the target slave node to receive the parameter modification instruction via a second wireless transceiver module of the target slave node; an eighth control module, configured to obtain an updated configuration parameter of the target slave node by controlling the target slave node to modify the configuration parameter of the target slave node based on the parameter modification instruction; and a ninth control module, configured to control the second wireless transceiver module of the target slave node to acquire, based on the updated configuration parameter of the target slave node, respective radio air interface signal corresponding to the current position information.

In some embodiments, the apparatus 900 further includes: a second obtaining module, configured to obtain a reference channel threshold corresponding to the reference channel indicator; a first generation module, configured to, in response to the test value being less than the reference channel threshold, generate an alert message; and a first output module, configured to output the alert message.

In some embodiments, the apparatus 900 further includes: a third obtaining module, configured to obtain a plurality of test values of reference channel indicator of an area to be tested, in which the plurality of test values of the reference channel indicator characterize a channel quality of the area to be detected at different time points; a first determining module, configured to determine difference information of the plurality of test values of the reference channel indicator; a second determining module, configured to, in response to the difference information being greater than a difference threshold, determine a number of slave nodes to be added based on the difference information; and a second output module, configured to generate and output a prompt message for adding the slave nodes, in which the prompt message includes at least the number of the slave nodes to be added.

It should be noted that the above description of the text device in the embodiments is similar to the above description of the method embodiments and have similar beneficial effects as the method embodiments. Technical details not disclosed in the apparatus embodiments of the disclosure can be referred to the description of the method embodiments of the disclosure for understanding.

It should be noted that in the embodiments of the disclosure, if the above method for testing is implemented in the form of a software function module, sold and used as an independent product, it can also be stored in a computer readable storage medium. On the basis of such an understanding, the essential technical solution in the disclosure, or a part of the technical solution contributing to the related art may be embodied in the form of a software product. The computer software product is stored in a storage medium, including several instructions configured to cause the UE to perform all or part of the steps in various embodiments of the disclosure. The forgoing medium includes a USB disk, a mobile hard disk, a Read-Only Memory (ROM), a Random Access Memory (RAM), a magnetic disk or an optical disk, and other media that may store program codes. In this way, embodiments of the disclosure are not limited to any particular combination of hardware and software.

Accordingly, embodiments of the disclosure provide a computer-readable storage medium, storing a computer program that, when executed by a processor, implements the method for testing provided in the above embodiments.

The above description of the storage medium embodiments is similar to the above description of the method embodiments and have similar beneficial effects as the method embodiments. Technical details not disclosed in the storage medium embodiments of the disclosure can be referred to the description of the method embodiments of the disclosure for understanding.

It should be noted herein that the above description of the storage medium embodiments is similar to the above description of the method embodiments and have similar beneficial effects as the method embodiments. Technical details not disclosed in the storage medium embodiments of the disclosure can be referred to the description of the method embodiments of the disclosure for understanding.

It should be understood that the terms "an embodiment" or "one embodiment" or "some embodiments" throughout the specification mean that a particular feature, structure, or characteristic associated with the embodiments is included in at least one embodiment of the disclosure. Therefore, "in an embodiment" or "in the embodiment" or "in some embodiments" appearing at various places throughout the specification may not necessarily refer to the same embodiment. Moreover, these particular features, structures, or characteristics may be combined in one or more embodiments in any suitable manner. It should be understood that in various embodiments of the disclosure, serial numbers in the above steps/processes does not imply an order for execution, and the order for execution of the steps/processes should be determined by their functions and internal logic, which should not constitute any limitation on the implementation process of the embodiments of the disclosure. The above serial numbers in the embodiments of the disclosure are for the purpose of description only and do not represent the advantages or disadvantages of the embodiments.

It should to be noted that, the terms "include/including", "includes/including" or any other variations thereof, are intended to cover a non-exclusive inclusion, such that a process, a method, an article or an apparatus including a series of elements not only includes those elements but also includes other elements not expressly listed, or may also include elements inherent to such process, method, article, or apparatus. In the absence of more constraints, the elements defined by a sentence "including one" do not preclude the presence of additional same elements in the process, method, article, or apparatus that includes the elements.

In several embodiments according to the disclosure, it should be understood that the disclosed apparatuses and methods may be implemented in other ways. The apparatus embodiments described above are merely exemplary. For example, the division of the modules is merely a logical function division. There may be other division methods in actual implementation. For example, a plurality of modules or components may be combined, or may be integrated into another system, or some features may be ignored or not executed. In addition, the coupling, direct coupling, or communication connection between the components shown or discussed may be implemented by some interfaces, and indirect coupling or communication connection between the devices or modules may be an electrical connection, a mechanical connection or a connection in other forms.

The above units described as separate parts may or may not be physically separated, the parts shown as units may or may not be physical units, which may be located in one place, or may be distributed to a plurality of network units. Some or all units may be selected according to the actual needs to achieve the purpose of the disclosure.

In addition, all functional units in the embodiments of the disclosure may be integrated into one processing unit, or each unit may be separately configured as a unit, or two or more units may be integrated into one unit. The above-mentioned integrated units may be implemented in the form of hardware or in the form of hardware plus software functional units.

Those skilled in the art may understand that, all or part of the steps of implementing the above-mentioned method embodiments may be completed by hardware related to program instructions, and the above-mentioned programs may be stored in a computer-readable storage medium, The programs implement the steps of the above-mentioned method embodiments when executed. The above-mentioned storage medium includes various media that may store program codes, such as a mobile storage device, a ROM, a RAM, a magnetic disk or an optical disk.

Or, if the integrated units of the disclosure are implemented in the form of a software function module, sold and used as an independent product, they may also be stored in a computer readable storage medium. On the basis of such an understanding, the essential technical solution of the disclosure, or a part of the technical solution contributing to the related art may be embodied in the form of a software product. The computer software product is stored in a storage medium, including several instructions configured to cause the UE to perform all or part of the steps in various embodiments of the disclosure. The forgoing medium includes a ROM, a magnetic disk or an optical disk, and other media that may store program codes.

The above is merely a specific embodiment of the disclosure, but the scope of protection of the disclosure is not limited thereto, and any person skilled in the art may easily envisage changing or replacing within the technical scope disclosed in the disclosure, which should be covered within the scope of protection of the disclosure. Therefore, the protection scope of the disclosure shall be subject to the protection scope of the claims.

### Industrial utility

Embodiments of the disclosure expect to provide a test device, a method, an apparatus, and a computer-readable storage medium. The test device includes at least a master node and a plurality of slave nodes. The master node includes at least a first wireless transceiver module and an analyzing module; the first wireless transceiver module is configured to receive channel data transmitted by each of the plurality of slave nodes, and the analyzing module is configured to obtain a test value of a reference channel indicator by analyzing the channel data. Each of the plurality of slave nodes includes at least a second wireless transceiver module and a parsing module; the second wireless transceiver module of each of the plurality of slave nodes is configured to acquire a radio air interface signal corresponding to respective slave nodes, the parsing module of each of the plurality of slave nodes is configured to obtain the channel data of respective slave nodes by parsing the radio air interface signal corresponding to respective slave nodes, and the second wireless transceiver module of each of the plurality of slave nodes is further configured to transmit the channel data of respective slave nodes to the master node. Thus, by completing the communication between the master and slave node via the first wireless transceiver module and the second wireless transceiver module, the separation of the master node and the slave node is realized.

## Claims

1. A device for testing a radio air interface signal, comprising at least a master node and a plurality of slave nodes, wherein:
the master node comprises at least a first wireless transceiver module and an analyzing module; the first wireless transceiver module is configured to receive channel data transmitted from each of the plurality of slave nodes, and the analyzing module is configured to obtain a test value of a reference channel indicator by analyzing the channel data; and
each of the plurality of slave nodes comprises at least a second wireless transceiver module and a parsing module; the second wireless transceiver module of each of the plurality of slave nodes is configured to acquire a radio air interface signal corresponding to respective slave nodes, the parsing module of each of the plurality of slave nodes is configured to obtain the channel data of respective slave nodes by parsing the radio air interface signal corresponding to respective slave nodes, and the second wireless transceiver module of each of the plurality of slave nodes is further configured to transmit the channel data of respective slave nodes to the master node.

2. The device according to claim 1, wherein the master node further comprises a clock module, and the clock module is configured to perform time calibration on each of the plurality of slave nodes to synchronize time of each of the plurality of slave nodes with universal time coordinated, UTC.

3. The device according to claim 1, wherein each of the plurality of slave nodes further comprises a storage module and a positioning module,
the storage module of each of the plurality of slave nodes is configured to store the channel data of respective slave nodes; and
the positioning module of each of the plurality of slave nodes is configured to acquire position information of respective slave nodes.

4. A method for testing a radio air interface signal, applied to a device according to any one of claims 1 to 3, comprising:
controlling each of a plurality of slave nodes to transmit channel data of respective slave nodes to a master node via a second wireless transceiver module;
controlling the master node to receive the channel data via a first wireless transceiver module; and
obtaining a test value of a reference channel indicator by controlling an analyzing module of the master node to perform a channel analyzing on the channel data based on the reference channel indicator.

5. The method according to claim 4, further comprising:
controlling the master node to issue a configuration parameter corresponding to each of the plurality of slave nodes to respective slave nodes via the first wireless transceiver module;
controlling each of the plurality of slave nodes to receive the configuration parameter corresponding to respective slave nodes via the second wireless transceiver module;
obtaining current position information of each of the plurality of slave nodes;
controlling the second wireless transceiver module of each of the plurality of slave nodes to acquire, based on the configuration parameter corresponding to respective slave nodes, respective radio air interface signal corresponding to the current position information;
obtaining the channel data by controlling each of the plurality of slave nodes to parse respective radio air interface signal via a parsing module; and
controlling each of the plurality of slave nodes to store the channel data via a storage module.

6. The method according to claim 5, further comprising:
controlling the master node to determine a target slave node from the plurality of slave nodes based on a parameter modification instruction, wherein the target slave node is a slave node that requires to modify a configuration parameter and the parameter modification instruction carries an identification of the target slave node;
controlling the master node to issue the parameter modification instruction to the target slave node via the first wireless transceiver module;
controlling the target slave node to receive the parameter modification instruction via the second wireless transceiver module of the target slave node;
obtaining an updated configuration parameter of the target slave node by controlling the target slave node to modify the configuration parameter of the target slave node based on the parameter modification instruction; and
controlling the second wireless transceiver module of the target slave node to acquire, based on the updated configuration parameter of the target slave node, respective radio air interface signal corresponding to the current position information.

7. The method according to any one of claims 4 to 6, further comprising:
obtaining a reference channel threshold corresponding to the reference channel indicator;
in response to the test value being less than the reference channel threshold, generating an alert message; and
outputting the alert message.

8. The method according to any one of claims 4 to 6, further comprising:
obtaining a plurality of test values of the reference channel indicator of an area to be tested, wherein the plurality of test values of the reference channel indicator characterize a channel quality of the area to be detected at different time points;
determining difference information of the plurality of test values of the reference channel indicator;
in response to the difference information being greater than a difference threshold, determining a number of slave nodes to be added based on the difference information; and
generating and outputting a prompt message for adding the slave nodes, wherein the prompt message comprises at least the number of the slave nodes to be added.

9. An apparatus for testing a radio air interface signal, comprising:
a transmission module, configured to control each of a plurality of slave nodes to transmit channel data of respective slave nodes to a master node via a second wireless transceiver module;
a receiving module, configured to control the master node to receive the channel data via a first wireless transceiver module; and
an analyzing module, configured to obtain a test value of a reference channel indicator by controlling an analyzing module of the master node to perform a channel analyzing on the channel data based on the reference channel indicator.

10. A computer-readable storage medium, storing computer-executable instructions, which are configured to perform the method according to any one of claims 4 to 8.
